(19) Europäisches Patentamt
European Patent Office
Office européen des brevets

(11) **EP 4 645 022 A1**

(12) **EUROPEAN PATENT APPLICATION**
published in accordance with Art. 153(4) EPC

(43) Date of publication:
05.11.2025 Bulletin 2025/45

(21) Application number: 24777783.2

(22) Date of filing: 18.03.2024

(51) International Patent Classification (IPC):
*G05D 1/43* (2024.01)

(52) Cooperative Patent Classification (CPC):
G05D 1/633; G05D 1/243; G06V 10/454;
G06V 10/80; G06V 10/806; G06V 10/82;
G06V 20/58; G05D 2109/10; G05D 2111/10

(86) International application number:
PCT/CN2024/082248

(87) International publication number:
WO 2024/198994 (03.10.2024 Gazette 2024/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 24.03.2023 CN 202310327794

(71) Applicant: Huawei Technologies Co., Ltd.
Shenzhen, Guangdong 518129 (CN)

(72) Inventors:
• WANG, Yaoyuan
Shenzhen, Guangdong 518129 (CN)

• LUO, Wentao
Shenzhen, Guangdong 518129 (CN)
• ZHANG, Ziyang
Shenzhen, Guangdong 518129 (CN)
• WANG, Yuchen
Shenzhen, Guangdong 518129 (CN)
• ZHANG, Jingyi
Shenzhen, Guangdong 518129 (CN)

(74) Representative: MERH-IP Matias Erny Reichl
Hoffmann
Patentanwälte PartG mbB
Paul-Heyse-Straße 29
80336 München (DE)

(54) **MOTION CONTROL METHOD AND MOVING DEVICE**

(57) A motion control method and a motion device are provided. The method includes: obtaining an image of a first area, where the image indicates location information of a first obstacle in the first area, and the first area is an area of a destination of a motion device; obtaining sensor information, where the sensor information indicates first depth information between a second obstacle and the motion device, and the second obstacle is an obstacle at a first preset height in the first area; determining first distance information of the first obstacle based on the image and the first depth information, where the first distance information indicates a lateral distance between the first obstacle and the second obstacle in the image and a depth distance between the first obstacle and the motion device; and in a process in which the motion device moves to the destination, controlling, based on the first distance information, the motion device to perform obstacle avoidance. The solutions of this application may be applied to a motion device like a smart home or an obstacle avoidance robot, to improve obstacle sensing accuracy of the motion device and real-time performance of obstacle avoidance of the motion device.

<u>1000</u>

S1010: Obtain an image of a first area, where the image indicates location information of a first obstacle in the first area, and the first area is an area of a destination of a motion device

S1020: Obtain sensor information, where the sensor information indicates first depth information between a second obstacle and the motion device, and the second obstacle is an obstacle at a first preset height in the first area

S1030: Determine distance information of the first obstacle based on the image and the first depth information, where the first obstacle is an obstacle at a height between the first preset height and a second preset height in the first area, and first distance information indicates a lateral distance between the first obstacle and the second obstacle in the image and a depth distance between the first obstacle and the motion device

S1040: In a process in which the motion device moves to the destination, control, based on the first distance information, the motion device to perform obstacle avoidance

FIG. 10

## Description

This application claims priority to Chinese Patent Application No. 202310327794.1, filed with the China National Intellectual Property Administration on March 24, 2023 and entitled "MOTION CONTROL METHOD AND MOTION DEVICE", which is incorporated herein by reference in its entirety.

## TECHNICAL FIELD

This application relates to the field of robot obstacle avoidance technologies, and more specifically, to a motion control method and a motion device.

## BACKGROUND

An obstacle avoidance technology is a technology in which in a process of moving to a target point, a robot senses an obstacle on a moving path, and avoids the obstacle in time to continue moving to the target point. In the current obstacle avoidance technology, obstacle avoidance planning is usually performed based on an obstacle sensed by a two-dimensional lidar. Because the two-dimensional lidar can sense only an obstacle at a specific height, problems of insufficient sensing information and poor real-time performance of obstacle avoidance decision and planning exist in an obstacle avoidance planning process. Consequently, obstacle avoidance failures frequently occur in an obstacle avoidance process of the robot.

In view of this, a motion control solution that can improve obstacle sensing accuracy and real-time performance of obstacle avoidance needs to be developed urgently.

## SUMMARY

This application provides a motion control method and a motion device, to improve obstacle sensing accuracy of the motion device and real-time performance of obstacle avoidance of the motion device.

The motion device in this application may include a road transportation means, a water transportation means, an air transportation means, an industrial device, an agricultural device, an entertainment device, or the like. For example, the motion device may include a driverless vehicle. The vehicle is a vehicle in a broad sense, and may be a transportation means (for example, a commercial vehicle, a passenger vehicle, a motorcycle, a flight vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), a recreation device, a toy vehicle, or the like. A type of the vehicle is not specifically limited in embodiments of this application. Alternatively, the motion device may include a smart home, for example, a device like a robotic vacuum cleaner.

According to a first aspect, a motion control method is provided. The method includes: obtaining an image of a first area, where the image indicates location information of a first obstacle in the first area, and the first area is an area of a destination of a motion device; obtaining sensor information, where the sensor information indicates first depth information between a second obstacle and the motion device, and the second obstacle is an obstacle at a first preset height in the first area; determining first distance information of the first obstacle based on the image and the first depth information, where the first obstacle is an obstacle at a height between the first preset height and a second preset height in the first area, and the first distance information indicates a lateral distance between the first obstacle and the second obstacle in the image and a depth distance between the first obstacle and the motion device; and in a process in which the motion device moves to the destination, controlling, based on the first distance information, the motion device to perform obstacle avoidance.

In the foregoing technical solution, more abundant obstacle information may be obtained based on the sensor information and the image, to improve obstacle sensing accuracy of the motion device. Then, distance information of an obstacle at a height between the first preset height and the second preset height is determined based on the abundant obstacle information, and core information (for example, the first distance information) that helps the motion device perform obstacle avoidance planning is extracted, so that the motion device performs the obstacle avoidance planning based on the core information. This helps reduce an amount of data that needs to be preprocessed in an obstacle avoidance planning process of the motion device, thereby improving real-time performance of the obstacle avoidance of the motion device. Particularly, for a dynamic scenario in which an obstacle changes greatly, the foregoing method helps the motion device quickly and accurately plan an obstacle avoidance path.

For example, the image may be a red green blue (red green blue, RGB) image, a grayscale image, or the like.

In some possible implementations, the sensor information is obtained by a detection sensor, and the detection sensor may include a detection-type sensor like a lidar or a photoelectric sensor. Further, the first preset height may be a sensing height of the detection sensor. The first preset height may be less than or equal to a height of the motion device, or may be greater than a height of the motion device. This is not specifically limited in this embodiment of this application.

In an example, if the motion device is a device (for example, a robotic vacuum cleaner) moving on a plane, the second preset height may be a height lower than that of the motion device, for example, may be a height of the plane.

In another example, if the motion device is a flight device (for example, an uncrewed aerial vehicle), the second preset height may be a height higher than that of the motion device, for example, may be a height 2 meters or 3 meters higher than that of the motion device; or may be a height lower than that of the motion device, for example, may be a height 2 meters or 3 meters lower than that of the motion device. This is not specifically limited in this embodiment of this application.

For example, the first area may include an area sensed from an angle of view of an image sensor, and the image sensor is configured to obtain the image.

For example, a location of the first obstacle in the first area may be determined based on a two-dimensional coordinate parameter of the first obstacle in the image and an intrinsic parameter matrix of the image sensor.

It should be noted that the destination of the motion device may include a final target location of the motion device, or may include a location that is passed by the motion device when the motion device moves to the final target location.

In some possible implementations, the lateral distance between the first obstacle and the second obstacle and the depth distance between the first obstacle and the motion device may be used to determine a location of the first obstacle in an O-XYZ coordinate system of the motion device. For example, an origin of the O-XYZ coordinate system of the motion device may be a central point of the motion device, and the O-XYZ includes an X axis, a Y axis, and a Z axis. The Z axis may be parallel to a front orientation of the motion device, the Y axis is parallel to a height direction of the motion device, and the X axis may be separately perpendicular to the Y axis and the Z axis. Further, an X coordinate of the first obstacle in an O-XZ coordinate system may be determined based on the lateral distance between the first obstacle and the second obstacle, and a Z coordinate of the first obstacle in the O-XZ coordinate system may be determined based on the depth distance between the first obstacle and the motion device.

With reference to the first aspect, in some implementations of the first aspect, the determining first distance information of the first obstacle based on the image and the first depth information includes: determining the lateral distance between the first obstacle and the second obstacle based on a pixel pitch between pixels in the image; and determining the depth distance between the first obstacle and the motion device based on a grayscale value of a pixel in the image.

With reference to the first aspect, in some implementations of the first aspect, the determining the depth distance between the first obstacle and the motion device based on a grayscale value of a pixel in the image includes: determining, based on the first depth information, a depth distance corresponding to a grayscale value of a first pixel in the image, where the first pixel is a pixel that is in the image and that corresponds to a pattern of the second obstacle; and determining the depth distance between the first obstacle and the motion device based on at least one of a grayscale value of a second pixel in the image and a grayscale gradient value between the second pixel and the first pixel, and the depth distance corresponding to the grayscale value of the first pixel, where the second pixel is a pixel that is in the image and that corresponds to a pattern of the first obstacle.

For example, the first depth information and the image may be input into a convolutional neural network, to obtain a depth estimation map, where the depth estimation map indicates a depth distance corresponding to each pixel in the image.

It may be understood that there may be a large error in estimating the depth distance between the first obstacle and the motion device based only on the image, and estimating the depth distance between the second obstacle and the motion device by using the first depth information as a reference and in combination with the image can greatly improve accuracy of depth estimation.

With reference to the first aspect, in some implementations of the first aspect, the method further includes: detecting the second obstacle via the detection sensor of the motion device, and obtaining the sensor information based on data collected by the detection sensor, where a sensing range of the detection sensor is adjustable.

With reference to the first aspect, in some implementations of the first aspect, the method further includes: dynamically adjusting the sensing range of the detection sensor based on the depth distance indicated by the first distance information.

For example, the sensing range of the detection sensor may be adjusted based on a comparison result between the first depth information and the first distance information.

It should be noted that the first depth information and the first distance information each include obstacle distance information in two dimensions. When a matching degree between the first distance information and the first depth information is less than or equal to a preset threshold, it indicates that the sensing range of the detection sensor is inappropriate, and therefore needs to be adjusted.

In the foregoing technical solution, the sensing range of the sensor is adjusted in real time, to improve an environmental adaptability of the motion device, so as to improve intelligence of the motion device.

In some possible implementations, that the motion device adjusts the sensing range of the detection sensor based on the comparison result between the first distance information and the first depth information includes: The motion device decreases the sensing range of the detection sensor when a depth indicated by the first distance information is less than a depth indicated by the first depth information; or the motion device increases the sensing range of the detection sensor when a depth indicated by the first distance information is greater than a depth indicated by the first depth information.

In the foregoing technical solution, when the depth indicated by the first distance information is less than the depth indicated by the first depth information, it indicates that an obstacle detected by the detection sensor through sensing is farther, and therefore the sensing range of the detection sensor may be narrowed down; or when the depth indicated by the first depth information is less than the depth indicated by the first distance information, it indicates that an obstacle detected by the detection sensor through sensing is closer, and indicates that data obtained by the detection sensor is extremely important, and the sensing range of the detection sensor needs to be increased as much as possible.

With reference to the first aspect, in some implementations of the first aspect, the sensor information further indicates a density of the second obstacle, and the method further includes: dynamically adjusting a sensing frame rate of the detection sensor based on the density of the second obstacle.

In the foregoing technical solution, the sensing frame rate of the sensor is adjusted in real time, to improve the environmental adaptability of the motion device, so as to improve the intelligence of the motion device.

In some possible implementations, the adjusting a sensing frame rate of the detection sensor based on the density of the first obstacle includes: increasing the sensing frame rate of the detection sensor when the density of the first obstacle is high; or decreasing the sensing frame rate of the detection sensor when the density of the first obstacle is low.

In some possible implementations, the obstacle density is associated with a scene texture, and a lower obstacle density indicates a lower scene texture. In a low-texture scenario, there is no need to use a low sensing frame rate.

In the foregoing technical solution, the sensing frame rate is increased in a scenario with abundant obstacles, so that the sensing accuracy of the motion device can be improved; or the sensing frame rate is decreased in the low-texture scenario, so that power consumption of the detection sensor can be reduced, to avoid a waste of the power consumption.

With reference to the first aspect, in some implementations of the first aspect, the image indicates location information of a third obstacle in the first area, and the method further includes: determining an obstacle that is in the second obstacle and the third obstacle and that is closer to the motion device in a first plane as the first obstacle, where the first plane is a plane parallel to a depth direction of the motion device and a height direction.

For example, the third obstacle may be all obstacles included in the image.

In some possible implementations, the depth estimation map is determined based on the image, where the depth estimation map indicates the depth distance corresponding to each pixel in the image. Further, the first obstacle is determined based on the depth estimation map.

For example, in the depth estimation map, pixel coordinates in an x direction are xl to xr, pixel coordinates in a y direction are yl to yt, and zl to zt×r are values of all pixels in the depth estimation map. r and t are integers greater than 1, the pixel coordinates in the x direction may be used to determine a lateral distance between an obstacle and the motion device, and the pixel coordinates in the y direction may be used to determine a height of the obstacle.

In some possible implementations, an obstacle indicated by a pixel with a smallest value in pixels from yl to yhi that corresponds to xi is determined as the first obstacle, and the smallest value is the depth distance between the first obstacle and the motion device. i is any value between 1 and r.

A plane represented by x=xi in the depth estimation map may be understood as an example of the first plane.

In some possible implementations, the first preset height and the second preset height may be determined based on the depth estimation map. It may be understood that the first preset height and the second preset height each may be represented as a curve in the depth estimation map. In this case, yyi is a pixel coordinate that is of the first preset height in a y direction and that corresponds to xi, and yhi is a pixel coordinate that is of the second preset height in the y direction and that corresponds to xi.

Further, that the first distance information may be determined based on the depth estimation map, the first preset height, and the second preset height includes: determining a smallest value in pixels from yyi to yhi that corresponds to xi as a minimum depth distance corresponding to xi, where minimum depth distances corresponding to x1 to xr form the first distance information.

In the foregoing technical solution, the depth estimation map that includes obstacle distance information in three dimensions is compressed into the first distance information that includes only two dimensions (the x direction and a z direction), and information that is valuable for the obstacle avoidance planning is retained. This helps reduce the amount of data that needs to be preprocessed in the obstacle avoidance planning process of the motion device, thereby improving real-time performance of the obstacle avoidance of the motion device.

With reference to the first aspect, in some implementations of the first aspect, the method further includes: obtaining a current motion parameter of the motion device; and the controlling, based on the first distance information, the motion device to perform obstacle avoidance includes: inputting the current motion parameter and the first distance information into a first neural network, to obtain current environment sensing information; inputting the current environment sensing information and the destination into a second neural network, to obtain a target angular velocity and a target linear velocity; and controlling, based on the target angular velocity and the target linear velocity, the motion device to perform obstacle avoidance.

For example, the current motion parameter may include but is not limited to a linear velocity, an angular velocity, current location coordinates, and a pose angle (or referred to as a heading angle) of the motion device.

For example, the first neural network may include a convolutional neural network that is based on an attention mechanism, and the second neural network may include a recurrent neural network.

In some possible implementations, the second neural network further includes a fully connected layer (fully connected layer, FC). That the motion device inputs the current environment sensing information and the destination into a second neural network, to obtain a target angular velocity and a target linear velocity includes: The motion device inputs the current environment sensing information and historical environment sensing information into the recurrent neural network to obtain environment sensing information. The motion device inputs the environment sensing information and the destination into the FC layer to obtain the target angular velocity and the target linear velocity.

In the foregoing technical solution, the current environment sensing information is obtained by using the convolutional neural network that is based on the attention mechanism. This meets a characteristic that a person pays different attention to a field of view in different motion statuses, and reduces information redundancy and invalid information synthesis after multi-sensor information fusion. Environment sensing information with a historical field of view is obtained by using a recurrent neural network layer. At the FC layer, current information, historical information (for example, the environment sensing information), and future information (for example, the destination) are used as sensing inputs to help further improve accuracy of the obstacle avoidance.

With reference to the first aspect, in some implementations of the first aspect, the controlling, based on the first distance information, the motion device to perform obstacle avoidance includes: determining a fused depth distance based on the first distance information and the first depth information; and controlling, based on the fused depth distance and the destination, the motion device to perform obstacle avoidance.

In some possible implementations, an error may be introduced in a process of processing the sensor information and the image. As a result, a depth indicated by first distance information of an obstacle in some areas is greater than the depth indicated by the first depth information. In the foregoing technical solution, the first depth information and the first distance information are fused, to further improve the sensing accuracy. This helps improve real-time performance and a success rate of the obstacle avoidance.

According to a second aspect, a motion device is provided. An image sensor is configured to obtain an image of a first area, where the image indicates location information of a first obstacle in the first area, and the first area is an area of a destination of the motion device. A detection sensor is configured to: detect a second obstacle at a first preset height in the first area and obtain sensor information, where the sensor information indicates first depth information between the second obstacle and the motion device, and the second obstacle is an obstacle at the first preset height in the first area. A processor is configured to determine first distance information of the first obstacle based on the image and the first depth information, where the first obstacle is an obstacle at a height between the first preset height and a second preset height in the first area, and the first distance information indicates a lateral distance between the first obstacle and the second obstacle in the image and a depth distance between the first obstacle and the motion device. The processor is further configured to: in a process in which the motion device moves to the destination, control, based on the first distance information, the motion device to perform obstacle avoidance.

With reference to the second aspect, in some implementations of the second aspect, the processor is configured to: determine the lateral distance between the first obstacle and the second obstacle based on a pixel pitch between pixels in the image; and determine the depth distance between the first obstacle and the motion device based on a grayscale value of a pixel in the image.

With reference to the second aspect, in some implementations of the second aspect, a location of the second obstacle in the first area includes a height of the second obstacle, and the processor is further configured to: determine, based on the first depth information, a depth distance corresponding to a grayscale value of a first pixel in the image, where the first pixel is a pixel that is in the image and that corresponds to a pattern of the second obstacle; and determine the depth distance between the first obstacle and the motion device based on at least one of a grayscale value of a second pixel in the image and a grayscale gradient value between the second pixel and the first pixel, and the depth distance corresponding to the grayscale value of the first pixel, where the second pixel is a pixel that is in the image and that corresponds to a pattern of the first obstacle.

With reference to the second aspect, in some implementations of the second aspect, a sensing range of the detection sensor is adjustable.

With reference to the second aspect, in some implementations of the second aspect, the processor is configured to dynamically adjust the sensing range of the detection sensor based on the depth distance indicated by the first distance information.

With reference to the second aspect, in some implementations of the second aspect, the sensor information further indicates a density of the second obstacle, and the processor is further configured to adjust a sensing frame rate of the detection sensor based on a density of the first obstacle.

With reference to the second aspect, in some implementations of the second aspect, the image indicates location information of a third obstacle in the first area, and the processor is further configured to determine an obstacle that is in the second obstacle and the third obstacle and that is closer to the motion device in a first plane as the first obstacle, where the first plane is a plane parallel to a depth direction of the motion device and a height direction.

With reference to the second aspect, in some implementations of the second aspect, the processor is configured to: obtain a current motion parameter of the motion device; input the current motion parameter and the first distance information into a first neural network, to obtain current environment sensing information; input the current environment sensing information and the destination into a second neural network, to obtain a target angular velocity and a target linear velocity; and control, based on the target angular velocity and the target linear velocity, the motion device to perform obstacle avoidance.

With reference to the second aspect, in some implementations of the second aspect, the processor is configured to: determine a fused depth distance based on the first distance information and the first depth information; and control, based on the fused depth distance and the destination, the motion device to perform obstacle avoidance.

According to a third aspect, an integrated circuit is provided. The integrated circuit includes: a memory, configured to store a computer program; and a processor, configured to execute the computer program stored in the memory, to enable the apparatus to perform the method in any possible implementation of the first aspect.

According to a fourth aspect, a computer program product is provided. The computer program product includes computer program code. When the computer program code is run on a computer, the computer is enabled to perform the method in any possible implementation of the first aspect.

It should be noted that the computer program code may be completely or partially stored in a first storage medium. The first storage medium may be encapsulated with a processor, or encapsulated separately from a processor.

According to a fifth aspect, a computer-readable medium is provided. The computer-readable medium stores instructions. When the instructions are executed by a processor, the processor is enabled to implement the method in any possible implementation of the first aspect.

## BRIEF DESCRIPTION OF DRAWINGS

FIG. 1 is a functional block diagram of a motion device according to an embodiment of this application;

FIG. 2 is a diagram of a system architecture needed for implementing a motion control method according to an embodiment of this application;

FIG. 3 is a schematic flowchart of a motion control method according to an embodiment of this application;

FIG. 4 is a diagram of a neural network model according to an embodiment of this application;

FIG. 5 is another diagram of a neural network model according to an embodiment of this application;

FIG. 6 is a diagram of a depth estimation map and minimum depth information according to an embodiment of this application;

FIG. 7 is still another diagram of a neural network model according to an embodiment of this application;

FIG. 8 is a diagram of a comparison result between first depth information and minimum depth information according to an embodiment of this application;

FIG. 9 is a diagram of an overall procedure of a motion control method according to an embodiment of this application;

FIG. 10 is another schematic flowchart of a motion control method according to an embodiment of this application;

FIG. 11 is a block diagram of a motion control apparatus according to an embodiment of this application; and

FIG. 12 is a block diagram of a motion control apparatus according to an embodiment of this application.

## DESCRIPTION OF EMBODIMENTS

In descriptions of embodiments of this application, "/" means "or" unless otherwise specified. For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

In embodiments of this application, prefix words such as "first" and "second" are used only to distinguish different described objects, and do not limit locations, a sequence, priorities, quantities, content, or the like of the described objects. In embodiments of this application, use of a prefix word, for example, an ordinal number, used to distinguish between the described objects does not constitute a limitation on the described objects. For descriptions of the described objects, refer to the descriptions of the context in the claims or embodiments. The use of such a prefix word should not constitute a redundant limitation.

Because embodiments of this application relate to application of a neural network, for ease of understanding, the following first describes terms and concepts related to the neural network that may be used in embodiments of this application.

(1) Neural network

The neural network may include a neuron. The neuron may be an operation unit that uses $x_s$ and an intercept 1 as inputs. An output of the operation unit may be as follows:

$$h_{W,b}(x) = f(W^T x) = f(\sum_{s=1}^{n} W_s x_s + b) \quad (1-1)$$

s=1, 2, ..., or n, n is a natural number greater than 1, $W_s$ is a weight of $x_s$, and b is a bias of the neuron. f is an activation function (activation function) of the neuron, and is used to introduce a non-linear characteristic into the neural network to convert an input signal in the neuron into an output signal. The output signal of the activation function may be used as an input of a next convolutional layer, and the activation function may be a sigmoid function. The neural network is a network constituted by linking a plurality of single neurons together. To be specific, an output of a neuron may be an input of another neuron. An input of each neuron may be connected to a local receptive field of a previous layer to extract a feature of the local receptive field. The local receptive field may be a region including several neurons.

(2) Deep neural network

The deep neural network (deep neural network, DNN), also referred to as a multi-layer neural network, may be understood as a neural network having a plurality of hidden layers. The DNN is divided based on locations of different layers, and a neural network in the DNN may be classified into three types: an input layer, the hidden layer, and an output layer. Generally, a 1st layer is the input layer, a last layer is the output layer, and middle layers are all the hidden layers. Layers are fully connected. To be specific, any neuron at an $i^{th}$ layer is necessarily connected to any neuron at an $(i+1)^{th}$ layer.

Although the DNN seems to be complex, the DNN is actually not complex in terms of work at each layer. Simply speaking, the DNN is the following linear relationship expression: $\vec{y} = \alpha(W\vec{x} + \vec{b})$, where $\vec{x}$ is an input vector, $\vec{y}$ is an output vector, $\vec{b}$ is a bias vector, $W$ is a weight matrix (also referred to as a coefficient), and $\alpha(\,)$ is an activation function. At each layer, the output vector $\vec{y}$ is

obtained by performing only such a simple operation on the input vector $\vec{x}$. Due to a large quantity of DNN layers, quantities of coefficients W and bias vectors $\vec{b}$ are also large. Definitions of these parameters in the DNN are as follows: The coefficient W is used as an example. It is assumed that in a three-layer DNN, a linear coefficient from a $4^{th}$ neuron at a $2^{nd}$ layer to a $2^{nd}$ neuron at a $3^{rd}$ layer is defined as $W_{24}^{3}$. The superscript 3 indicates a layer at which the coefficient W is located, and the subscripts correspond to an output $3^{rd}$-layer index 2 and an input $2^{nd}$-layer index 4.

In conclusion, a coefficient from a $k^{th}$ neuron at an $(L-1)^{th}$ layer to a $j^{th}$ neuron at an $L^{th}$ layer is defined as $W_{jk}^{L}$.

It should be noted that the input layer has no parameter $W$. In the deep neural network, more hidden layers make the network more capable of describing a complex case in the real world. Theoretically, a model with more parameters has higher complexity and a larger "capacity". It indicates that the model can complete a more complex learning task. A process of training the deep neural network is a process of learning the weight matrix, and a final objective of the training is to obtain a weight matrix (a weight matrix including vectors W at a plurality of layers) at all layers of a trained deep neural network.

(3) Convolutional neural network

The convolutional neural network (convolutional neural network, CNN) is a deep neural network with a convolutional structure. The convolutional neural network includes a feature extractor that includes a convolutional layer and a sub-sampling layer, and the feature extractor may be considered as a filter. The convolutional layer is a neuron layer that is in the convolutional neural network and at which convolution processing is performed on an input signal. At the convolutional layer of the convolutional neural network, one neuron may be connected only to some adjacent-layer neurons. One convolutional layer usually includes several feature maps, and each feature map may include some neurons that are in a rectangular arrangement. Neurons in a same feature map share a weight, and the shared weight herein is a convolution kernel. Weight sharing may be understood as that an image information extraction manner is irrelevant to a location. The convolution kernel may be initialized in a form of a random-size matrix. In a process of training the convolutional neural network, the convolution kernel may obtain an appropriate weight through learning. In addition, benefits directly brought by the weight sharing are that connections between layers of the convolutional neural network are reduced, and an overfitting risk is reduced.

(4) A recurrent neural network (recurrent neural network, RNN) is used to process sequence data. In a conventional neural network model, layers from an input layer to a hidden layer and then to an output layer are fully connected, and nodes at each layer are not connected. Although this common neural network has resolved a plurality of problems, it is still incapable of resolving a plurality of problems. For example, to predict a next word in a sentence, a previous word usually needs to be used, because the previous word and the next word in the sentence are not independent of each other. A reason why the RNN is referred to as the recurrent neural network is that a current output of a sequence is related to a previous output. A specific representation form is that the network memorizes previous information and applies the previous information to calculation of the current output. To be specific, nodes at the hidden layer are connected, and an input of the hidden layer not only includes an output of the input layer, but also includes an output of the hidden layer at a previous moment. Theoretically, the RNN can process sequence data of any length. Training for the RNN is the same as training for a conventional CNN or DNN.

The RNN is intended to make a machine capable of memorizing like a human. Therefore, an output of the RNN needs to depend on current input information and historical memorized information.

The foregoing describes the terms related to the neural network. The following describes the technical solutions in embodiments of this application with reference to the accompanying drawings.

As described above, a current obstacle avoidance algorithm has problems of insufficient sensing information and poor real-time performance of obstacle avoidance decision and planning. Consequently, obstacle avoidance failures frequently occur in an obstacle avoidance process of a robot. Specifically, in the field of robot obstacle avoidance technologies, current problems mainly include the following two points:

One is a contradiction between sensing accuracy and real-time performance of model inference: Accuracy of obstacle sensing and avoidance based on a two-dimensional (two dimensional, 2D) radar is limited. For example, the 2D radar can sense only an obstacle at a radar height. When the obstacle is higher or lower than the radar height, the obstacle cannot be sensed, and the obstacle avoidance may fail. Consequently, the robot hits the obstacle, causing a danger. However, rough multi-sensor fusion only increases calculation difficulty of an obstacle avoidance decision model, and then reduces real-time performance of the model inference.

The other is that a fixed sensing range and frame rate of the radar cause information redundancy: Increasing the sensing range and frame rate of the radar improves the sensing accuracy of the robot, but causes a problem like long duration needed for information fusion and information collection. Currently, when the radar performs scanning, the scanning is still performed based on a preset fixed sensing range and frame rate, and adaptive adjustment cannot be implemented. In a scenario with a large quantity of obstacles, when the scanning is performed based on the fixed sensing frame rate, the sensing frame rate is low, and consequently, effective information of all obstacles cannot be obtained. In a scenario with a small quantity of obstacles, when the scanning is performed based on the fixed sensing frame rate, the sensing frame rate is excessively high, and a waste of power consumption of a sensor may be caused.

It should be noted that the sensing frame rate (or referred to as a scanning speed) of the radar represents a quantity of revolutions at which a radar motor rotates in one second, that is, a quantity of times of completing a circle of scanning per second. A sampling rate of the radar is fixed. Therefore, a higher frame rate indicates a lower angular resolution and more detailed representation of object details. A lower frame rate indicates a higher angular resolution. The sensing range of the radar may be a scanning range of the radar, for example, a scanning angle.

In view of this, an embodiment of this application provides a motion control method, to fuse and compress 2D radar information and image information, so as to obtain a depth distance between an obstacle at a height within a preset height range and a motion device. In this way, motion of the motion device is controlled based on the depth distance, to achieve an obstacle avoidance objective. In addition, an embodiment of this application further provides a motion control method, to adjust a sensing range of a 2D radar based on a comparison result between the depth distance and the 2D radar information; and adjust a sensing frame rate of the 2D radar based on the 2D radar information. In this way, an environmental adaptability of the motion device is improved, information redundancy is reduced, and real-time performance of obstacle avoidance planning is improved.

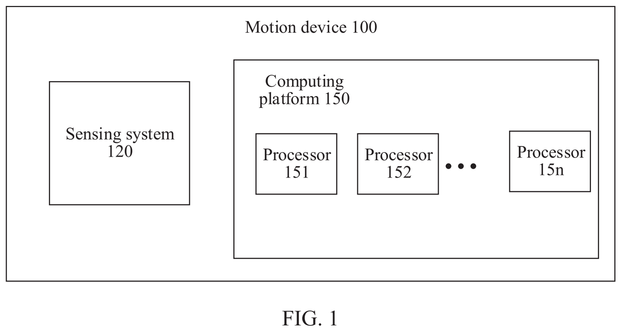

FIG. 1 is a functional block diagram of a motion device 100 according to an embodiment of this application. The motion device 100 may include a sensing system 120 and a computing platform 150. The sensing system 120 may include one or more types of sensors that sense information about an environment around the motion device 100. For example, the sensing system 120 may include a detection sensor and an image sensor. The detection sensor may include a detection-type sensor like a 2D radar (for example, a lidar), a photoelectric sensor, or an ultrasonic sensor. The image sensor may include a sensor like an RGB camera, a red green blue-depth (red green blue-depth, RGB-D) camera, or a time of flight (time of flight, TOF) camera whose captured image can be used to determine depth information (for example, an RGB image or a grayscale image).

Some or all functions of the motion device 100 may be controlled by the computing platform 150. The computing platform 150 may include one or more processors, for example, processors 151 to 15n (n is a positive integer). The processor is a circuit having an instruction processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital instruction processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory to execute the instructions, to implement a corresponding function.

In this embodiment of this application, the computing platform 150 may control obstacle avoidance driving of the motion device based on data collected by the detection sensor and the image sensor. In some possible implementations, the data collected by the detection sensor and the image sensor may be further stored in the memory in the computing platform 150.

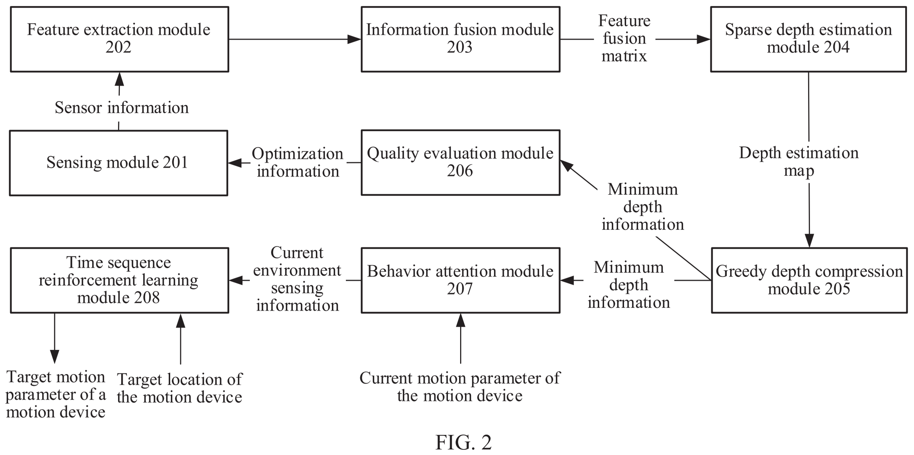

FIG. 2 is a diagram of a system architecture according to an embodiment of this application. As shown in FIG. 2, the system includes a sensing module 201, a feature extraction module 202, an information fusion module 203, a sparse depth estimation module 204, a greedy depth compression module 205, a quality evaluation module 206, a behavior attention module 207, and a time sequence reinforcement learning module 208. The sensing module 201 may include one or more types of sensors in the sensing system 120 shown in FIG. 1. The sensor may include, for example, a detection sensor and an image sensor. The feature extraction module 202, the information fusion module 203, the sparse depth estimation module 204, the greedy depth compression module 205, the quality evaluation module 206, the behavior attention module 207, and the time sequence reinforcement learning module 208 may include one or more types of processors in the computing platform 150 shown in FIG. 1.

Specifically, the feature extraction module 202 separately extracts a feature of sensor information collected by the detection sensor in the sensing module 201 and a feature of an image captured by the image sensor, to form a high-dimensional representation tensor (or referred to as a multi-dimensional array).

In some possible implementations, the image indicates a location of an obstacle 1 in an area sensed by the image sensor, and the sensor information indicates first depth information between a motion device and an obstacle 2 at a first preset height in the area sensed by the image sensor.

The feature extraction module 202 inputs the high-dimensional representation tensor into the information fusion module 203 to perform feature fusion, so as to obtain a feature fusion matrix. The information fusion module 203 inputs the feature fusion matrix into the sparse depth estimation module 204 to obtain a depth estimation map.

It may be understood that the depth estimation map indicates a depth distance between the obstacle 1 included in the image and the motion device, and the depth estimation map is represented by pixel coordinates in an x direction and a y direction, where the y direction represents a height direction, and the x direction is separately perpendicular to the height direction and a depth direction (referred to as a z direction below). In other words, the depth estimation map includes distance information in three dimensions: the x direction, the y direction, and the z direction.

The sparse depth estimation module 204 inputs the depth estimation map into the greedy depth compression module 205, to obtain minimum depth information, where the minimum depth information indicates a depth distance between a first obstacle and the motion device, and the first obstacle includes an obstacle that is in all obstacles at a height between the first preset height and a second preset height and that is closest to the motion device in a unit length in the x direction. In other words, the minimum depth information includes distance information in two dimensions: the x direction and the z direction.

Further, the greedy depth compression module 205 separately inputs the minimum depth information into the quality evaluation module 206 and the behavior attention module 207.

The quality evaluation module 206 obtains optimization information based on the minimum depth information and the sensor information, where the optimization information may be used to adjust a sensing range of the detection sensor. The behavior attention module 207 obtains current environment sensing information based on a current motion parameter (for example, an angular velocity, a linear velocity, and a mileage) of the motion device and the minimum depth information.

The behavior attention module 207 inputs a target location of the motion device and the current environment sensing information into the time sequence reinforcement learning module 208, to obtain a target motion parameter (for example, a linear velocity and an angular velocity) of the motion device. In this way, the motion device travels based on the target motion parameter, to achieve an obstacle avoidance objective.

It should be understood that the foregoing modules and apparatuses are merely examples. In actual application, the foregoing modules and apparatuses may be added or deleted based on an actual need. In an example, the information fusion module 203 and the sparse depth estimation module 204 may be combined into one module, that is, functions of the two modules are implemented by one module. In another example, the system may alternatively not include the quality evaluation module 206.

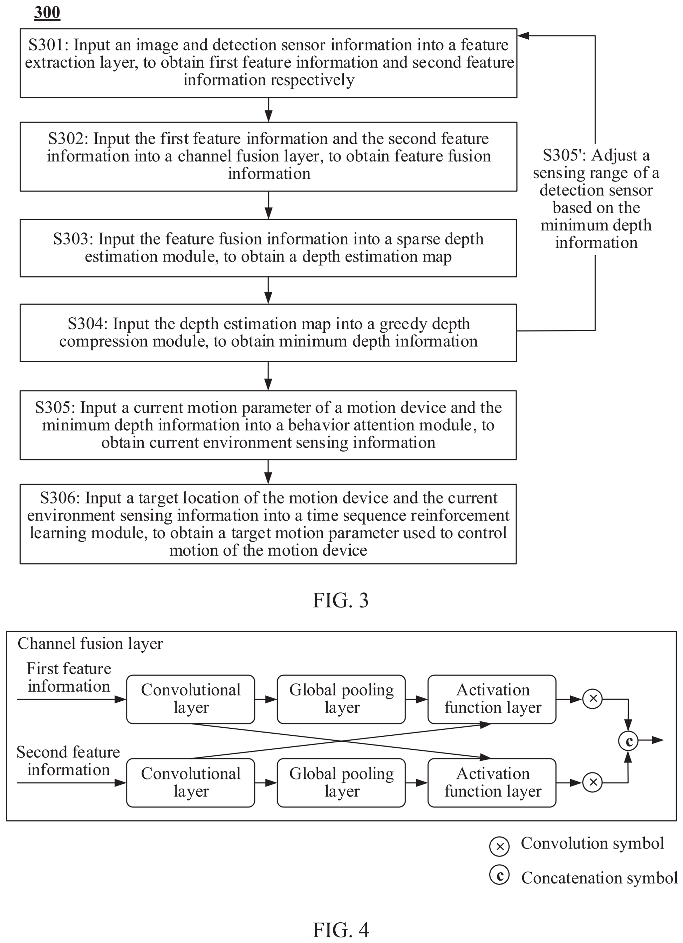

FIG. 3 is a schematic flowchart of a control method according to an embodiment of this application. The method 300 may be applied to the motion device shown in FIG. 1, or the method may be performed by the system shown in FIG. 2. Steps or operations of the control method shown in FIG. 3 are merely examples. In this embodiment of this application, other operations or variations of the operations in FIG. 3 may be further performed, and not all the operations in FIG. 3 may need to be performed. For example, the following uses an example in which the method is performed by a computing platform of the motion device for description. The method 300 may include the following steps.

S301: Input an image and sensor information into a feature extraction layer, to obtain first feature information and second feature information respectively.

For example, the image may be obtained by an image sensor, and the sensor information may be obtained by a detection sensor. The image sensor and the detection sensor may be sensors in the sensing system or the sensing module in the foregoing embodiments.

It should be noted that the image indicates a location of an obstacle 1 in an area sensed by the image sensor, and the sensor information indicates first depth information between the motion device and an obstacle 2 at a first preset height in the area sensed by the image sensor. The first preset height may include the first preset height in the foregoing embodiment. Specifically, the first preset height may be a sensing height of the detection sensor. The first preset height may be less than or equal to a height of the motion device, or may be greater than a height of the motion device. This is not specifically limited in this embodiment of this application.

For example, the first feature information and the second feature information may be high-dimensional embedded feature information, for example, may include the multi-dimensional array in the foregoing embodiment.

For example, the first feature information may include reference depth information, and the reference depth information includes a depth distance between the motion device and the obstacle 2 at the first preset height in the area sensed by the image sensor. The second feature information may include a pixel value of a pixel; the second feature information may include a three-dimensional coordinate parameter of the obstacle 1; or the second feature information may include texture information, color information, and the like.

In some possible implementations, that the sensor information includes data collected by a 2D lidar is used as an example. In this case, the data collected by the 2D lidar may be a sparse depth map. The sparse depth map includes logic code and a depth value. The depth value indicates a distance between a detected object (for example, an obstacle) and the motion device, a depth value between adjacent laser points is unknown, and the logic code indicates whether there is a valid depth value in an area in which the depth value is unknown. In this embodiment of this application, the feature extraction layer is used to extract the depth value from the sparse depth map, to obtain the reference depth information.

For example, the three-dimensional coordinate parameter of the obstacle 1 includes an x coordinate, a y coordinate, and a z coordinate of the obstacle 1 in a coordinate system of the image sensor. The coordinate system of the image sensor is a three-dimensional rectangular coordinate system established by using a focus center of the image sensor as an origin and using an optical axis as a z axis.

In some possible implementations, the three-dimensional coordinate parameter of the obstacle 1 may be determined based on a two-dimensional coordinate parameter of the obstacle 1 in the image and an intrinsic parameter matrix of the image sensor.

Specifically, a relationship between the three-dimensional coordinate parameter and the two-dimensional coordinate parameter is shown in the following formula:

$$\begin{bmatrix} u \\ v \\ 1 \end{bmatrix} = \frac{1}{z} \begin{bmatrix} fx & 0 & cx \\ 0 & fy & cy \\ 0 & 0 & 1 \end{bmatrix} \begin{bmatrix} x \\ y \\ z \end{bmatrix}$$

$\begin{bmatrix} fx & 0 & cx \\ 0 & fy & cy \\ 0 & 0 & 1 \end{bmatrix}$ is the intrinsic parameter matrix of the image sensor; x represents a horizontal coordinate of the obstacle 1 in the coordinate system of the image sensor; y represents a vertical coordinate of the obstacle 1 in the coordinate system of the image sensor; z represents a depth coordinate of the obstacle 1 in the coordinate system of the image sensor; u is a horizontal coordinate of a pixel of the obstacle 1 in a pixel coordinate system; v is a height coordinate of the pixel of the obstacle 1 in the pixel coordinate system; and f represents a focal length of the image sensor. fx represents a parameter obtained by scaling the focal length of the image sensor on a u axis in the pixel coordinate system, fy represents a parameter obtained by scaling the focal length of the image sensor on a v axis in the pixel coordinate system, cx represents translation of the origin of the coordinate system of the image sensor on the u axis, and cy represents translation of the origin of the coordinate system of the image sensor on the v axis.

In some possible implementations, the feature extraction layer may extract the second feature information according to the formula.

The feature extraction layer may be understood as an example of the foregoing feature extraction module 202. The feature extraction layer may be a pre-trained convolutional neural network, for example, VGG16, VGG19, or ResNet50.

S302: Input the first feature information and the second feature information into a channel fusion layer, to obtain feature fusion information.

The channel fusion layer may be understood as an example of the foregoing information fusion module 203.

For example, FIG. 4 is a diagram of the channel fusion layer, including a convolutional layer, a global pooling layer, and an activation function layer. Specifically, element-wise cross-multiplication is performed on an output obtained after the first feature information passes through the convolutional layer, the global pooling layer, and the activation function layer and an output obtained after the second feature information passes through the convolutional layer, the global pooling layer, and the activation function layer, and then channel-level concatenation is performed on information obtained through respective cross-multiplication, to obtain the feature fusion information.

S303: Input the feature fusion information into a sparse depth estimation module, to obtain a depth estimation map.

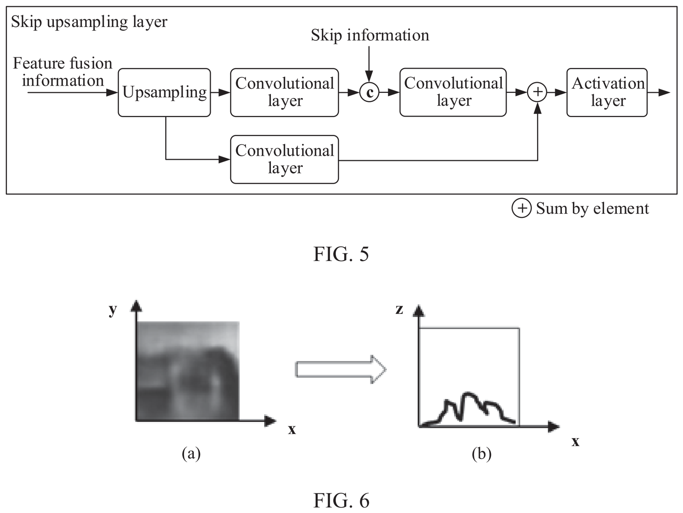

For example, the sparse depth estimation module may include the sparse depth estimation module 204 in the foregoing embodiment. The sparse depth estimation module may include a dilated convolutional layer and a skip upsampling layer. FIG. 5 is a diagram of the skip upsampling layer. Skip information is skip connection (skip connection) information, and may include a part or all of the feature fusion information. The feature fusion information is input into the sparse depth estimation module, to obtain the depth estimation map shown in (a) in FIG. 6.

S304: Input the depth estimation map into a greedy depth compression module, to obtain minimum depth information.

For example, the greedy depth compression module may include the greedy depth compression module 205 in the foregoing embodiment.

For example, in the depth estimation map shown in (a) in FIG. 6, pixel coordinates in an x direction are $x_1$ to $x_r$, pixel coordinates in a y direction are $y_1$ to $y_t$, and $z_1$ to $z_{t \times r}$ are values of all pixels in the depth estimation map. r and t are integers greater than 1.

In some possible implementations, the greedy depth compression module compresses the depth estimation map based on the first preset height and a second preset height, to obtain the minimum depth information. The second preset height may be lower than the height of the motion device, or may be higher than the first preset height.

In an example, the greedy depth compression module retains only a part between the first preset height and the second preset height in the depth estimation map, and determines the minimum depth information based on a value of each pixel in the part between the first preset height and the second preset height.

In another example, the minimum depth information is shown in (b) in FIG. 6. The greedy depth compression module may compress the depth estimation map by using the following formula to obtain the minimum depth information:

$$F[x_i] = \min(D[x_i, \; y_{yi} : y_{hi}])$$

D represents the depth estimation map, F represents the minimum depth information, $x_i$ represents a pixel coordinate corresponding to $x = x_i$ in the x direction in the depth estimation map, $y_{yi} : y_{hi}$ represents pixel coordinates corresponding to $y = y_{yi}$ to $y = y_{hi}$ in the y direction in the depth estimation map, i is any value between 1 and r, $y_{yi}$ is a pixel coordinate that is of the first preset height in a y direction and that corresponds to $x_i$, and $y_{hi}$ is a pixel coordinate that is of the second preset height in the y direction and that corresponds to $x_i$.

It may be understood that $F[x_i]$ represents a depth value between the motion device and an obstacle that is at a height between the first preset height and the second preset height and that is closest to the motion device at $x = x_i$.

S305: Input a current motion parameter of the motion device and the minimum depth information into a behavior attention module, to obtain current environment sensing information.

For example, the current motion parameter of the motion device may include one or more of a current angular velocity, a current linear velocity, a current location, a current pose angle, and a current heading angle of the motion device.

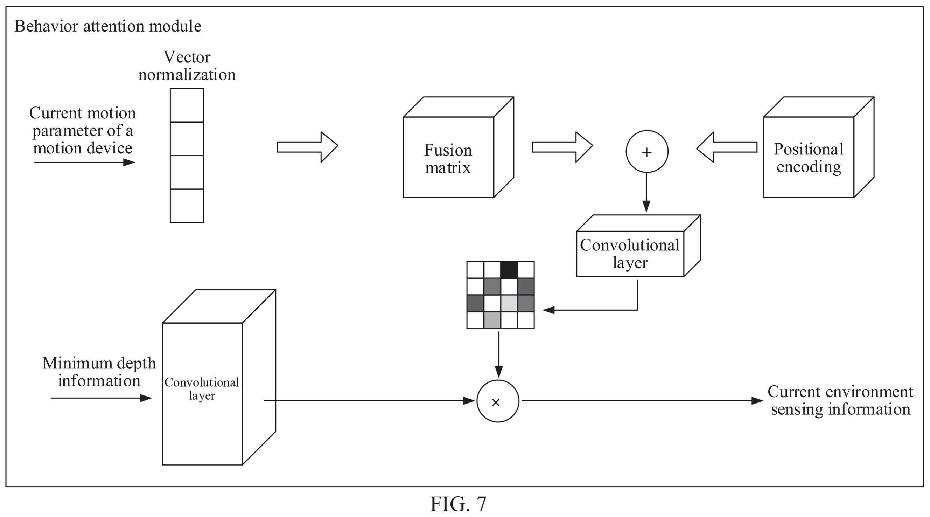

For example, the behavior attention module may include the behavior attention module 207 in the foregoing embodiment. FIG. 7 is a diagram of the behavior attention module. The current motion parameter of the motion device is input into a one-dimensional convolutional layer for vector normalization. To be specific, weight adjustment is performed on motion parameters with different unit meanings by using the convolutional layer, so that a difference between the motion parameters is reduced. One-dimensional output information obtained by performing the vector normalization on the motion parameters is combined to form a fusion matrix. Element-wise addition is performed on the fusion matrix and a positional encoding matrix, which subsequently pass through a two-dimensional convolutional layer, to obtain an attention matrix. The positional encoding matrix is a matrix having a same size as the fusion matrix, and the matrix is used to provide location information for the fusion matrix. For example, values (for example, 0, 1, 2, 3, ...) may be sequentially assigned, according to a specific rule, to the positional encoding matrix starting from a row 0 and a column 0, or encoding may be performed by using a positional encoding tool. Element-wise multiplication is performed on the attention matrix and an output obtained after the minimum depth information passes through the two-dimensional convolutional layer, to obtain the current environment sensing information.

In some possible implementations, the greedy depth compression module may further fuse the minimum depth information and the sensor information, to obtain fused minimum depth information, and then input the current motion parameter of the motion device and the fused minimum depth information into the behavior attention module.

S306: Input a target location of the motion device and the current environment sensing information into a time sequence reinforcement learning module, to obtain a target motion parameter used to control motion of the motion device.

For example, the time sequence reinforcement learning module may include the time sequence reinforcement learning module 208 in the foregoing embodiment. The time sequence reinforcement learning module may include a recurrent neural network, for example, a long short-term memory (long short-term memory, LSTM) neural network. The current environment sensing information and historical environment sensing information are sequentially input into the recurrent neural network, to obtain environment sensing information that includes historical importance selection and the current environment sensing information. Further, the environment sensing information and the target location are input into a fully connected layer, so that the fully connected layer can output the target motion parameter used to control the motion of the motion device.

S305': Adjust a sensing range of the detection sensor based on the minimum depth information.

For example, the minimum depth information may be input into the quality evaluation module 206 in the foregoing embodiment to obtain optimization information. The optimization information may indicate a matching degree between the minimum depth information and the first depth information.

In some possible implementations, when a coincidence degree between a curve of the minimum depth information and a curve of the first depth information is greater than or equal to a preset threshold, it is determined that the matching degree between the minimum depth information and the first depth information is high, and the sensing range of the detection sensor does not need to be adjusted; or when a coincidence degree between a curve of the minimum depth information and a curve of the first depth information is less than a preset threshold, the sensing range of the detection sensor is adjusted based on a comparison result between the minimum depth information and the first depth information. For example, the preset threshold may be 95%, may be 90%, or may be another value.

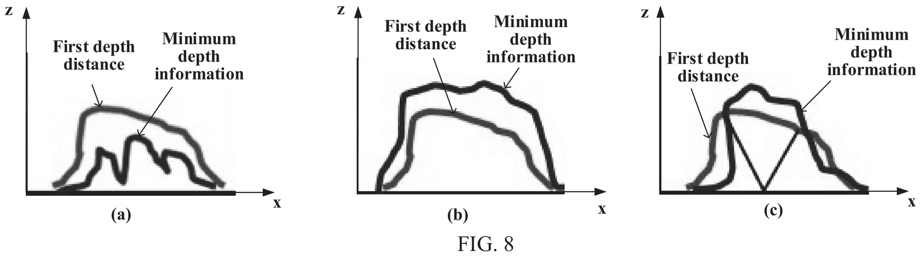

For example, the comparison result between the minimum depth information and the first depth information is shown in FIG. 8.

As shown in (a) in FIG. 8, when the first depth information is greater than the minimum depth information, that is, for any $x=x_j$ corresponding to curves in the figure, $z_{dj}>z_{mj}$, it indicates that an obstacle detected by the detection sensor through sensing is farther. Therefore, the sensing range of the detection sensor may be narrowed down. $z_{dj}$ is a depth distance that is of the obstacle detected by the detection sensor through sensing and that corresponds to $x_j$, and $z_{dj}$ is a depth distance, of an obstacle, that is obtained by fusing the sensor information and the image and that corresponds to $x_j$.

As shown in (b) in FIG. 8, when the first depth information is less than the minimum depth information, that is, for any $x=x_j$ corresponding to curves in the figure, $z_{dj}<z_{mj}$, it indicates that an obstacle detected by the detection sensor through sensing is closer, and indicates that data obtained by the detection sensor is extremely important, and the sensing range of the detection sensor needs to be increased as much as possible, to obtain data of depth distances between more abundant obstacles and the motion device.

As shown in (c) in FIG. 8, when a part of the first depth information curve is less than the minimum depth information, that is, for a part of $x=x_k$ corresponding to curves in the figure, $z_{dk}<z_{mk}$, the sensing range of the detection sensor may be adjusted, so that at least the part that is of the first depth information and that is less than the minimum depth information can be detected through sensing in the sensing range of the detection sensor.

In some possible implementations, the optimization information may further indicate a density of the obstacle in the area sensed by the image sensor, or the optimization information may further indicate a density of the obstacle sensed by the detection sensor, so that the motion device can adjust a sensing frame rate of the detection sensor based on the density of the obstacle. Specifically, when there are a large quantity of obstacles, the detection sensor may be adjusted to perform sensing at a high frame rate. When there are a small quantity of obstacles, the detection sensor may be adjusted to perform sensing at a medium frame rate. When there is almost no obstacle, the detection sensor may be adjusted to perform sensing at a low frame rate.

In a specific implementation process, S305' may alternatively not be performed.

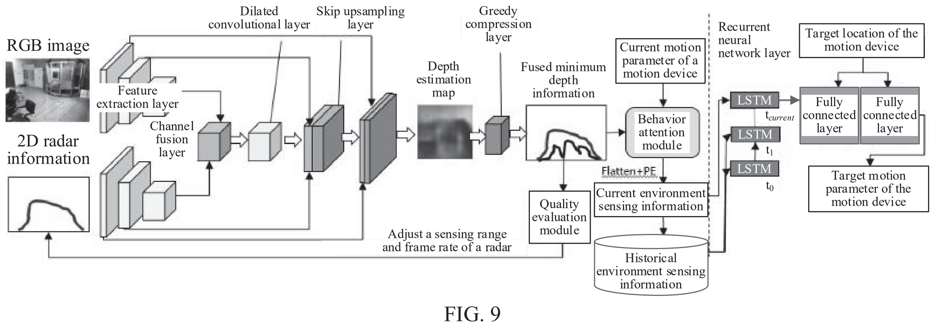

All procedures of S301 to S306 are shown in FIG. 9.

According to the motion control method provided in this embodiment of this application, obstacle sensing accuracy of the motion device and real-time performance of obstacle avoidance of the motion device can be improved. The image and the sensor information are fused, to obtain abundant obstacle location information, so as to improve the sensing accuracy of the motion device. The abundant obstacle location information is compressed, and redundant information is removed, to obtain core information, that is, the minimum depth information, that helps the motion device perform obstacle avoidance planning, so as to improve real-time performance of obstacle avoidance decision performed by the motion device. In addition, according to the motion control method provided in this embodiment of this application, the sensing range and the sensing frame rate of the sensor may be further adjusted in real time, to improve an environmental adaptability of the motion device, so as to improve intelligence of the motion device, and further help reduce energy consumption of the motion device.

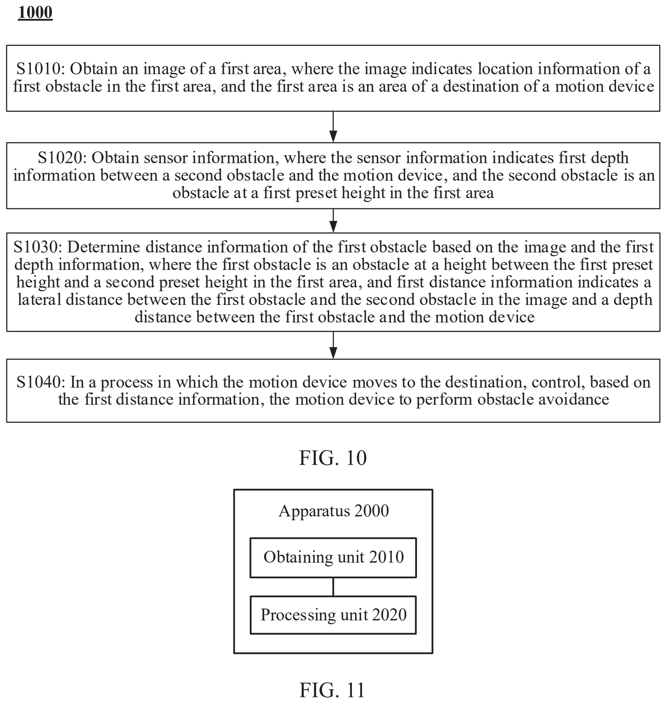

FIG. 10 is a schematic flowchart of a control method according to an embodiment of this application. The method 1000 may be applied to the motion device shown in FIG. 1, or the method may be performed by the system shown in FIG. 2. For example, the following uses an example in which the method is performed by the motion device for description. The method 1000 may include the following steps.

S1010: Obtain an image of a first area, where the image indicates location information of a first obstacle in the first area, and the first area is an area of a destination of the motion device.

For example, the image may include the image in the foregoing embodiment, and the first area may include the area sensed by the image sensor in the foregoing embodiment.

For example, a location of the first obstacle in the first area may be determined based on a two-dimensional coordinate parameter of the first obstacle in the image.

S1020: Obtain sensor information, where the sensor information indicates first depth information between a second obstacle and the motion device, and the second obstacle is an obstacle at a first preset height in the first area.

For example, the sensor information may include the sensor information in the foregoing embodiment.

S1030: Determine first distance information of the first obstacle based on the image and the first depth information, where the first distance information indicates a lateral distance between the first obstacle and the second obstacle in the image and a depth distance between the first obstacle and the motion device.

For example, the first distance information may include the minimum depth information in the foregoing embodiment. For a specific method for determining the first distance information by the motion device, refer to the descriptions in S301 to S304 in the method 300.

Details are not described herein again.

S1040: In a process in which the motion device moves to the destination, control, based on the first distance information, the motion device to perform obstacle avoidance.

For example, for a specific method for controlling motion of the motion device based on the first distance information by the motion device, refer to the descriptions in S305 and S306 in the method 300. Details are not described herein again.

According to the motion control method provided in this embodiment of this application, more abundant obstacle information may be obtained based on the sensor information and the image, to improve obstacle sensing accuracy of the motion device. Then, core information (for example, the first distance information) that helps the motion device perform obstacle avoidance planning is extracted based on the abundant obstacle information, so that the motion device performs the obstacle avoidance planning based on the core information, thereby improving real-time performance of the obstacle avoidance. Particularly, for a dynamic scenario in which an obstacle changes greatly, the foregoing method helps the motion device quickly and accurately plan an obstacle avoidance path.

In embodiments of this application, unless otherwise specified or there is a logic conflict, terms and/or descriptions between embodiments are consistent and may be mutually referenced, and technical features in different embodiments may be combined into a new embodiment based on an internal logical relationship thereof.

In an example, when the method 1000 is combined with S301 to S304 in the method 300, S301 to S304 may be summarized as: determining the lateral distance between the first obstacle and the second obstacle based on a pixel pitch between pixels in the image; and determining the depth distance between the first obstacle and the motion device based on a grayscale value of a pixel in the image.

The determining the depth distance between the first obstacle and the motion device based on a grayscale value of a pixel in the image includes: determining, based on the first depth information, a depth distance corresponding to a grayscale value of a first pixel in the image, where the first pixel is a pixel that is in the image and that corresponds to a pattern of the second obstacle; and determining the depth distance between the first obstacle and the motion device based on at least one of a grayscale value of a second pixel in the image and a grayscale gradient value between the second pixel and the first pixel, and the depth distance corresponding to the grayscale value of the first pixel, where the second pixel is a pixel that is in the image and that corresponds to a pattern of the first obstacle.

In another example, when the method 1000 is combined with S304 in the method 300, S304 may be summarized as: The image indicates location information of a third obstacle in the first area. The method further includes: determining an obstacle that is in the second obstacle and the third obstacle and that is closer to the motion device in a first plane as the first obstacle, where the first plane is a plane parallel to a depth direction of the motion device and a height direction.

The depth direction of the motion device may be the z direction shown in (b) in FIG. 6.

In still another example, when the method 1000 is combined with S305 and S306 in the method 300, S305 and S306 may be summarized as: obtaining a current motion parameter of the motion device; and the controlling, based on the first distance information, the motion device to perform obstacle avoidance includes: inputting the current motion parameter and the first distance information into a first neural network, to obtain current environment sensing information; inputting the current environment sensing information and the destination into a second neural network, to obtain a target angular velocity and a target linear velocity; and controlling, based on the target angular velocity and the target linear velocity, the motion device to perform obstacle avoidance.

The first neural network may include a behavior attention module, the second neural network may include a time sequence reinforcement learning module, and the destination includes the target location in the foregoing embodiment.

Alternatively, S305 and S306 may be summarized as: The motion device determines a fused depth distance based on the first distance information and the first depth information. The motion device controls, based on the fused depth distance and the destination, the motion device to perform obstacle avoidance.

The fused depth distance may include the fused minimum depth information in the method 300.

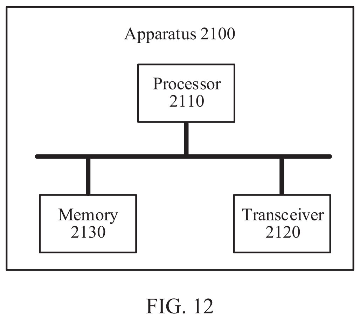

The foregoing describes in detail the methods provided in embodiments of this application with reference to FIG. 1 to FIG. 10. The following describes in detail apparatuses provided in embodiments of this application with reference to FIG. 11 and FIG. 12. It should be understood that descriptions of apparatus embodiments correspond to the descriptions of the method embodiments. Therefore, for content that is not described in detail, refer to the foregoing method embodiments. For brevity, details are not described herein again.

FIG. 11 is a block diagram of a motion control apparatus 2000 according to an embodiment of this application. The apparatus 2000 includes an obtaining unit 2010 and a processing unit 2020.

The apparatus 2000 may include units configured to perform the methods in FIG. 3 and FIG. 10. In addition, the units in the apparatus 2000 are separately used to implement corresponding procedures of the method embodiments in FIG. 3 and FIG. 10.

When the apparatus 2000 is configured to perform the method 1000 in FIG. 10, the obtaining unit 2010 may be configured to perform S1010 and S 1020 in the method 1000, and the processing unit 2020 may be configured to perform S 1030 and S1040 in the method 1000.

Specifically, the obtaining unit 2010 is configured to: obtain an image of a first area, where the image indicates location information of a first obstacle in the first area, and the first area is an area of a destination of a motion device; and obtain sensor information, where the sensor information indicates first depth information between a second obstacle and the motion device, and the second obstacle is an obstacle at a first preset height in the first area. The processing unit 2020 is configured to: determine first distance information of the first obstacle based on the image and the first depth information, where the first obstacle is an obstacle at a height between the first preset height and a second preset height in the first area, and the first distance information indicates a lateral distance between the first obstacle and the second obstacle in the image and a depth distance between the first obstacle and the motion device; and in a process in which the motion device moves to the destination, control, based on the first distance information, the motion device to perform obstacle avoidance.

Optionally, the processing unit 2020 is configured to: determine the lateral distance between the first obstacle and the second obstacle based on a pixel pitch between pixels in the image; and determine the depth distance between the first obstacle and the motion device based on a grayscale value of a pixel in the image.

Optionally, the processing unit 2020 is configured to: determine, based on the first depth information, a depth distance corresponding to a grayscale value of a first pixel in the image, where the first pixel is a pixel that is in the image and that corresponds to a pattern of the second obstacle; and determine the depth distance between the first obstacle and the motion device based on at least one of a grayscale value of a second pixel in the image and a grayscale gradient value between the second pixel and the first pixel, and the depth distance corresponding to the grayscale value of the first pixel, where the second pixel is a pixel that is in the image and that corresponds to a pattern of the first obstacle.

Optionally, the obtaining unit 2010 detects the second obstacle via a detection sensor of the motion device, and obtains the sensor information based on data collected by the detection sensor, where a sensing range of the detection sensor is adjustable.

Optionally, the processing unit 2020 is configured to dynamically adjust the sensing range of the detection sensor based on the depth distance indicated by the first distance information.

Optionally, the processing unit 2020 is configured to: when a second depth distance is less than the first depth information, decrease the sensing range of the detection sensor; or when a second depth distance is greater than the first depth information, increase the sensing range of the detection sensor.

Optionally, the sensor information further indicates a density of the second obstacle, and the processing unit 2020 is configured to dynamically adjust a sensing frame rate of the detection sensor based on the density of the second obstacle.

Optionally, the image indicates location information of a third obstacle in the first area, and the processing unit 2020 determines an obstacle that is in the second obstacle and the third obstacle and that is closer to the motion device in a first plane as the first obstacle, where the first plane is a plane parallel to a depth direction of the motion device and a height direction.

Optionally, the obtaining unit 2010 is further configured to obtain a current motion parameter of the motion device. The processing unit 2020 is configured to: input the current motion parameter and the first distance information into a first neural network, to obtain current environment sensing information; input the current environment sensing information and the destination into a second neural network, to obtain a target angular velocity and a target linear velocity; and control, based on the target angular velocity and the target linear velocity, the motion device to perform obstacle avoidance.

Optionally, the processing unit 2020 is configured to: determine a fused depth distance based on the first distance information and the first depth information; and control, based on the fused depth distance and the destination, the motion device to perform obstacle avoidance.

For example, the obtaining unit 2010 and the processing unit 2020 may be disposed in the motion device 100 shown in FIG. 1. More specifically, the obtaining unit 2010 and the processing unit 2020 may be disposed in the computing platform 150 shown in FIG. 1. For example, the obtaining unit 2010 and the processing unit 2020 may alternatively be disposed in the system shown in FIG. 2. More specifically, the obtaining unit 2010 may include the sensing module 201, and the processing unit 2020 may include one or more of the feature extraction module 202, the information fusion module 203, the sparse depth estimation module 204, the greedy depth compression module 205, the quality evaluation module 206, the behavior attention module 207, and the time sequence reinforcement learning module 208.

It should be understood that division into the units of the foregoing apparatus is merely logical function division. During actual implementation, all or some of the units may be integrated into one physical entity, or may be physically separate. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units of the apparatus. The processor is, for example, a general-purpose processor, for example, a CPU or a microprocessor, and the memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All of the units of the foregoing apparatus may be implemented in a form of software invoked by the processor, or all of the units may be implemented in a form of a hardware circuit, or some of the units may be implemented in a form of software invoked by the processor, and a remaining part may be implemented in a form of a hardware circuit.

Each unit of the foregoing apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the foregoing apparatus may be integrated together, or may be implemented independently. In an implementation, these units are integrated together and implemented in a form of a system-on-a-chip (system-on-a-chip, SoC). The SoC may include at least one processor, configured to implement any one of the foregoing methods or implement the functions of the units of the apparatus. Types of the at least one processor may be different. For example, the at least one processor includes a CPU and an FPGA, a CPU and an artificial intelligence processor, or a CPU and a GPU.

In a specific implementation process, the operations performed by the obtaining unit 2010 and the processing unit 2020 may be performed by one processor, or may be performed by different processors. In a specific implementation process, the foregoing one or more processors may be a processor disposed in the computing platform 150 shown in FIG. 1. Alternatively, the apparatus 2000 may be a chip disposed in the motion device 100.

FIG. 12 is a block diagram of a motion control apparatus according to an embodiment of this application. The motion control apparatus 2100 shown in FIG. 12 may include a processor 2110, a transceiver 2120, and a memory 2130. The processor 2110, the transceiver 2120, and the memory 2130 are connected through an internal connection path. The memory 2130 is configured to store instructions. The processor 2110 is configured to execute the instructions stored in the memory 2130, to implement the control methods in the foregoing embodiments. Optionally, the memory 2130 may be coupled to the processor 2110 through an interface, or may be integrated with the processor 2110.

It should be noted that the transceiver 2120 may include but is not limited to a transceiver apparatus of an input/output interface (input/output interface) type, to implement communication between the apparatus 2100 and another device or a communication network.

The memory 2130 may be a read-only memory (read-only memory, ROM), a static storage device, a dynamic storage device, or a random access memory (random access memory, RAM).

The transceiver 2120 uses, for example, but is not limited to, a transceiver apparatus of a transceiver type, to implement the communication between the apparatus 2100 and the another device or the communication network, to receive/send data/information used to implement the control methods in the foregoing embodiments.

In a specific implementation process, the apparatus 2100 may be disposed in the computing platform 150 shown in FIG. 1, or may be disposed in the system shown in FIG. 2.

An embodiment of this application further provides a motion device. The motion device includes the foregoing apparatus 2000; or the motion device includes the foregoing apparatus 2100, a detection sensor, and an image sensor.

An embodiment of this application further provides a computer program product. The computer program product includes computer program code. When the computer program code is run on a computer, the computer is enabled to implement the methods in the foregoing embodiments of this application.

An embodiment of this application further provides a computer-readable storage medium. The computer-readable medium stores computer instructions. When the computer instructions are run on a computer, the computer is enabled to implement the methods in the foregoing embodiments of this application.

An embodiment of this application further provides a chip, including a circuit, configured to perform the methods in the foregoing embodiments of this application.

In an implementation process, the steps in the foregoing methods can be implemented by using a hardware integrated logical circuit in the processor, or by using instructions in a form of software. The methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware in the processor. To avoid repetition, details are not described herein again.

It may be clearly understood by a person skilled in the art that, for the purpose of convenient and brief description, for detailed working processes of the foregoing described system, apparatus, and unit, refer to corresponding processes in the foregoing method embodiments. Details are not described herein again.

In the several embodiments provided in this application, it should be understood that the disclosed system, apparatus, and method may be implemented in another manner. For example, the foregoing described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, that is, may be located in one position, or may be distributed on a plurality of network units. Some or all of the units may be selected based on actual needs to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A motion control method, comprising:

   obtaining an image of a first area, wherein the image indicates location information of a first obstacle in the first area, and the first area is an area of a destination of a motion device;
   obtaining sensor information, wherein the sensor information indicates first depth information between a second obstacle and the motion device, and the second obstacle is an obstacle at a first preset height in the first area;

determining first distance information of the first obstacle based on the image and the first depth information, wherein the first obstacle is an obstacle at a height between the first preset height and a second preset height in the first area, and the first distance information indicates a lateral distance between the first obstacle and the second obstacle in the image and a depth distance between the first obstacle and the motion device; and

in a process in which the motion device moves to the destination, controlling, based on the first distance information, the motion device to perform obstacle avoidance.

2. The method according to claim 1, wherein the determining first distance information of the first obstacle based on the image and the first depth information comprises:

   determining the lateral distance between the first obstacle and the second obstacle based on a pixel pitch between pixels in the image; and determining the depth distance between the first obstacle and the motion device based on a grayscale value of a pixel in the image.

3. The method according to claim 2, wherein the determining the depth distance between the first obstacle and the motion device based on a grayscale value of a pixel in the image comprises:

   determining, based on the first depth information, a depth distance corresponding to a grayscale value of a first pixel in the image, wherein the first pixel is a pixel that is in the image and that corresponds to a pattern of the second obstacle; and determining the depth distance between the first obstacle and the motion device based on at least one of a grayscale value of a second pixel in the image and a grayscale gradient value between the second pixel and the first pixel, and the depth distance corresponding to the grayscale value of the first pixel, wherein the second pixel is a pixel that is in the image and that corresponds to a pattern of the first obstacle.

4. The method according to any one of claims 1 to 3, wherein the method further comprises:
   detecting the second obstacle via a detection sensor of the motion device, and obtaining the sensor information based on data collected by the detection sensor, wherein a sensing range of the detection sensor is adjustable.

5. The method according to claim 4, wherein the method further comprises:
   dynamically adjusting the sensing range of the detection sensor based on the depth distance indicated by the first distance information.

6. The method according to claim 4 or 5, wherein the sensor information further indicates a density of the second obstacle, and the method further comprises:
   dynamically adjusting a sensing frame rate of the detection sensor based on the density of the second obstacle.

7. The method according to any one of claims 1 to 6, wherein the image indicates location information of a third obstacle in the first area, and the method further comprises:
   determining an obstacle that is in the second obstacle and the third obstacle and that is closer to the motion device in a first plane as the first obstacle, wherein the first plane is a plane parallel to a depth direction of the motion device and a height direction.

8. The method according to any one of claims 1 to 7, wherein the method further comprises:

   obtaining a current motion parameter of the motion device; and the controlling, based on the first distance information, the motion device to perform obstacle avoidance comprises:

   inputting the current motion parameter and the first distance information into a first neural network, to obtain current environment sensing information; inputting the current environment sensing information and the destination into a second neural network, to obtain a target angular velocity and a target linear velocity; and controlling, based on the target angular velocity and the target linear velocity, the motion device to perform obstacle avoidance.

9. The method according to any one of claims 1 to 8, wherein the controlling, based on the first distance information, the motion device to perform obstacle avoidance comprises:

   determining a fused depth distance based on the first distance information and the first depth information; and controlling, based on the fused depth distance and the destination, the motion device to perform obstacle avoidance.

10. A motion device, comprising:

an image sensor, configured to obtain an image of a first area, wherein the image indicates location information of a first obstacle in the first area, and the first area is an area of a destination of the motion device;

a detection sensor, configured to: detect a second obstacle at a first preset height in the first area and obtain sensor information, wherein the sensor information indicates first depth information between the second obstacle and the motion device, and the second obstacle is an obstacle at the first preset height in the first area; and

a processor, configured to determine first distance information of the first obstacle based on the image and the first depth information, wherein the first obstacle is an obstacle at a height between the first preset height and a second preset height in the first area, the first distance information indicates a lateral distance between the first obstacle and the second obstacle in the image and a depth distance between the first obstacle and the motion device, and the processor is further configured to: in a process in which the motion device moves to the destination, control, based on the first distance information, the motion device to perform obstacle avoidance.

11. The motion device according to claim 10, wherein the processor is configured to:

determine the lateral distance between the first obstacle and the second obstacle based on a pixel pitch between pixels in the image; and determine the depth distance between the first obstacle and the motion device based on a grayscale value of a pixel in the image.

12. The motion device according to claim 11, wherein a location of the second obstacle in the first area comprises a height of the second obstacle, and the processor is further configured to:

determine, based on the first depth information, a depth distance corresponding to a grayscale value of a first pixel in the image, wherein the first pixel is a pixel that is in the image and that corresponds to a pattern of the second obstacle; and determine the depth distance between the first obstacle and the motion device based on at least one of a grayscale value of a second pixel in the image and a grayscale gradient value between the second pixel and the first pixel, and the depth distance corresponding to the grayscale value of the first pixel, wherein the second pixel is a pixel that is in the image and that corresponds to a pattern of the first obstacle.

13. The motion device according to any one of claims 10 to 12, wherein a sensing range of the detection sensor is adjustable.

14. The motion device according to claim 13, wherein the processor is configured to:
dynamically adjust the sensing range of the detection sensor based on the depth distance indicated by the first distance information.

15. The motion device according to claim 13 or 14, wherein the sensor information further indicates a density of the second obstacle, and the processor is further configured to:
adjust a sensing frame rate of the detection sensor based on a density of the first obstacle.

16. The motion device according to any one of claims 10 to 15, wherein the image indicates location information of a third obstacle in the first area, and the processor is further configured to:
determine an obstacle that is in the second obstacle and the third obstacle and that is closer to the motion device in a first plane as the first obstacle, wherein the first plane is a plane parallel to a depth direction of the motion device and a height direction.

17. The motion device according to any one of claims 10 to 16, wherein the processor is further configured to:

obtain a current motion parameter of the motion device;
input the current motion parameter and the first distance information into a first neural network, to obtain current environment sensing information;
input the current environment sensing information and the destination into a second neural network, to obtain a target angular velocity and a target linear velocity; and
control, based on the target angular velocity and the target linear velocity, the motion device to perform obstacle avoidance.

18. The motion device according to any one of claims 10 to 17, wherein the processor is configured to:

determine a fused depth distance based on the first distance information and the first depth information; and
control, based on the fused depth distance and the destination, the motion device to perform obstacle avoidance.

19. An integrated circuit, comprising:

a memory, configured to store a computer program; and

a processor, configured to execute the computer program stored in the memory, to enable the apparatus to perform the method according to any one of claims 1 to 9.

20. A computer-readable storage medium, wherein the computer-readable storage medium stores instructions, and when the instructions are executed by a processor, the processor is enabled to implement the method according to any one of claims 1 to 9.

Motion device 100

Computing
platform 150

Sensing system
120

Processor
151

Processor
152

• • •

Processor
15n

FIG. 1

FIG. 2

EP 4 645 022 A1

300

S301: Input an image and detection sensor information into a feature extraction layer, to obtain first feature information and second feature information respectively

↓

S302: Input the first feature information and the second feature information into a channel fusion layer, to obtain feature fusion information

↓

S303: Input the feature fusion information into a sparse depth estimation module, to obtain a depth estimation map

↓

S304: Input the depth estimation map into a greedy depth compression module, to obtain minimum depth information

↓

S305: Input a current motion parameter of a motion device and the minimum depth information into a behavior attention module, to obtain current environment sensing information

↓

S306: Input a target location of the motion device and the current environment sensing information into a time sequence reinforcement learning module, to obtain a target motion parameter used to control motion of the motion device

S305': Adjust a sensing range of a detection sensor based on the minimum depth information

FIG. 3

Channel fusion layer

First feature information → Convolutional layer → Global pooling layer → Activation function layer → ⊗ → c →

Second feature information → Convolutional layer → Global pooling layer → Activation function layer → ⊗ →

⊗ Convolution symbol

c Concatenation symbol

FIG. 4

FIG. 5

FIG. 6

FIG. 7

EP 4 645 022 A1

FIG. 8

FIG. 9

**1000**

S1010: Obtain an image of a first area, where the image indicates location information of a first obstacle in the first area, and the first area is an area of a destination of a motion device

S1020: Obtain sensor information, where the sensor information indicates first depth information between a second obstacle and the motion device, and the second obstacle is an obstacle at a first preset height in the first area

S1030: Determine distance information of the first obstacle based on the image and the first depth information, where the first obstacle is an obstacle at a height between the first preset height and a second preset height in the first area, and first distance information indicates a lateral distance between the first obstacle and the second obstacle in the image and a depth distance between the first obstacle and the motion device

S1040: In a process in which the motion device moves to the destination, control, based on the first distance information, the motion device to perform obstacle avoidance

FIG. 10

Apparatus 2000

Obtaining unit 2010

Processing unit 2020

FIG. 11

EP 4 645 022 A1

Apparatus 2100

Processor
2110

Memory
2130

Transceiver
2120

FIG. 12

28

## INTERNATIONAL SEARCH REPORT

| International application No. |
|---|
| **PCT/CN2024/082248** |

| A. | CLASSIFICATION OF SUBJECT MATTER |
|---|---|

G05D1/43(2024.01)i

According to International Patent Classification (IPC) or to both national classification and IPC

| B. | FIELDS SEARCHED |
|---|---|

Minimum documentation searched (classification system followed by classification symbols)

IPC:G05D G01S

Documentation searched other than minimum documentation to the extent that such documents are included in the fields searched

Electronic data base consulted during the international search (name of data base and, where practicable, search terms used)

CNABS, CNTXT, CNKI: 避障, 障碍, 距离, 激光, 雷达, 融合, 深度, 图像; VEN, ENTXT, ElSEVIER: obstacle, avoid, distance, laser, radar, fuse, deep, image

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 110502019 A (BEIJING YUNJI TECHNOLOGY CO., LTD.) 26 November 2019 (2019-11-26) <br> description, paragraphs 24-65, and figures 1-4 | 1-20 |
| A | CN 112363494 A (SHENZHEN EXCELLAND TECHNOLOGY CO., LTD.) 12 February 2021 (2021-02-12) <br> description, paragraphs 83-124, and figures 2-3 | 1-20 |
| A | CN 113156421 A (NANJING UNIVERSITY OF POSTS AND TELECOMMUNICATIONS) 23 July 2021 (2021-07-23) <br> entire document | 1-20 |
| A | CN 113485359 A (BEIJING CHAOWEI CENTURY TECHNOLOGY CO., LTD.) 08 October 2021 (2021-10-08) <br> entire document | 1-20 |
| A | CN 115670328 A (SHARKNINJA (CHINA) TECHNOLOGY CO., LTD.) 03 February 2023 (2023-02-03) <br> entire document | 1-20 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 May 2024** | **05 June 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/082248** |

**C.    DOCUMENTS CONSIDERED TO BE RELEVANT**

| Category* | Citation of document, with indication, where appropriate, of the relevant passages | Relevant to claim No. |
|---|---|---|
| A | EP 3945349 A1 (CONTINENTAL AUTOMOTIVE GMBH) 02 February 2022 (2022-02-02) entire document | 1-20 |

Form PCT/ISA/210 (second sheet) (July 2022)

**INTERNATIONAL SEARCH REPORT**
Information on patent family members

International application No.

**PCT/CN2024/082248**

| Patent document cited in search report | | | Publication date (day/month/year) | Patent family member(s) | Publication date (day/month/year) |
|---|---|---|---|---|---|
| CN | 110502019 | A | 26 November 2019 | None | |
| CN | 112363494 | A | 12 February 2021 | None | |
| CN | 113156421 | A | 23 July 2021 | None | |
| CN | 113485359 | A | 08 October 2021 | None | |
| CN | 115670328 | A | 03 February 2023 | None | |
| EP | 3945349 | A1 | 02 February 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310327794